# EUROPEAN PATENT SPECIFICATION

(11) **EP 2 430 914 B1**
(45) Date of publication and mention of the grant of the patent: **18.06.2014**
(21) Application number: 10774585.3
(22) Date of filing: 11.05.2010
(51) Int. Cl.: A01K 23/00

(54) **DEVICE FOR PICKING UP DOG EXCREMENT**
VORRICHTUNG ZUR AUFNAHME VON HUNDEKOT
DISPOSITIF DE COLLECTE D'EXCRÉMENTS POUR CHIENS

(30) Priority: 12.05.2009 AR P000001697
(43) Date of publication of application: 21.03.2012
(73) Proprietor: Blanco, Roberto Horacio, C.P. 1611 Don Torcuato Buenos Aires (AR); Klarenberg, Alejandro Jose, C.P. 1611 Don Torcuato, Buenos Aires (AR); Bosio Blanco, Carlos Conrado, C.P. 08240 Manresa, Barcelona (ES)
(72) Inventor: Blanco, Roberto Horacio, C.P. 1611 Don Torcuato Buenos Aires (AR); Klarenberg, Alejandro Jose, C.P. 1611 Don Torcuato, Buenos Aires (AR); Bosio Blanco, Carlos Conrado, C.P. 08240 Manresa, Barcelona (ES)
(74) Representative: Serrat Viñas, Sara
(86) International application number: PCT/ES2010/070314
(87) International publication number: WO 2010/130860

(56) References cited:
- EP-A1- 1 665 928
- EP-A1- 1 665 928
- WO-A1-91/01084
- DE-C- 272 208
- ES-A1- 2 299 401
- FR-A1- 2 649 585
- FR-A1- 2 675 660
- FR-A3- 2 903 276
- GB-A- 2 450 100
- DATABASE WPI Derwent Publications Ltd., London, GB; AN 2006-175420, XP008165340 & DE 20 2005 001078 U1 (GROS FRITZ) 05 January 2006

## Description

The present invention generally relates to articles intended for maintaining environmental hygiene, more specifically it relates to a device for collecting dog excrement, its main object being that of collecting the excrement that a dog produces at the same time they are being produced, preventing the place where the animal is at that time from being contaminated or dirtied.

An arrangement providing an impermeable bag preferably made of low cost thermoplastic material like a collecting device results from the features of the invention, said device being applied beforehand placed against the anal region of the animal by means of the simple manipulation of threads provided in the arrangement, whereby it is firmly maintained in the suitable position and is removed after use with a quick maneuver hermetically sealing said bag at the same time without the owner needing to take any precaution to prevent dirtying himself or bothering the dog with the maneuver.

Due to the simple structure of the parts which make up the collecting device, in addition to obtaining a disposable, compact device having reduced dimensions, a reduced price, with which the feces is stored at the same time it is originated, there is an additional undeniable advantage of perfectly keeping the feces isolated for subsequent disposal, without projecting out any particle or odor inherent to the organic waste. It should be taken into consideration as another important advantage that both the placement and the removal of the arrangement can be done without causing discomfort for the animal, and that the bag is quickly and almost instantaneously removed and closed with a single simultaneous operation.

The following are considered advantages of the present invention:
Low cost and disposable.

Does not bother the dog, who immediately becomes accustomed.

Very simple and quick to place it in position.

Simultaneous closing of the collecting bag with the action of removing the arrangement in a single movement.

Elimination of emanations.

The impossibility of contaminating the owner and the environment.

### Prior Art

Embodiments of collecting devices for animal waste to prevent dirtying the places where the owner or walker takes the animals are known in the prior art. These include brushes and bags for collecting droppings and disposing of them in the appropriate places. There are also harnesses that can be fixed to the body of the animal wearing a bag where the droppings are stored during deposition, eliminating the contamination of public places they pass through, especially paths, flowerbeds and gardens in plazas.

Among other documents, patent US4813949, which discloses a "Diaper for dogs and other small quadrupeds", has been found in prior art databases. It is formed by a textile body band and tail band forming a T. It includes a bifurcation projecting from the center of said band, with Velcro-type fasteners at one or both ends and an absorbent cushion fixed therein in the center of the tail band. It is fastened by encircling the animal's body, the two bands crossing on either side of the tail. This arrangement shows that the partial protection it provides is rather precarious.

Patent DE19827997 discloses another type of "Disposable diaper for dogs of all sizes"; the shape is very similar to baby diapers, being fastened by adhesive strips. This embodiment also lacks identity which would interfere with the present embodiment.

Patent WO-01/43537 A1 relates to a "Simple animal feces receiver applicable to dogs". It is made up of an inner annular band on which a feces receiving bag is placed, which is fastened by means of another annular band which is adjusted on the previous one. They are fastened to the anus and held in position by a pair of loops fastened by side threads arranged on the inner faces of the back legs of the animal and looping over the hip they are joined above the body by another pair of threads connected to the inner annular band extending on either side of the tail. To remove the bag, the entire arrangement must be dismounted and removed from between the two bands and closed by hand.

Patent US5819691 consists of an "Apparatus for collecting animal waste". It includes a harness formed by a type of belt that can be adjusted to the animal's torso with backwardly projecting strips ending in an annular body having a suitable collecting bag contacting the dog's body.

Patent US5427059 relates to a "Waste collecting device for dogs and like animals". It is also formed by a harness made for being adjustable to the animal's torso according to the animal's size. It extends from the dog's neck and supports the collecting means, a bag, against the anus in a position that does not cause discomfort for the animal by means of side strips fastened along the dog's body.

The mentioned embodiments are rather complicated for being incorporated to the animal and are of a rather high cost; they are generally not practical because they are complicated to handle.

Some of them have the significant drawback of requiring the dog's companion to remove the bag and close it by hand, therefore running the risk of getting his hands dirty from the deposition in addition to having to withstand the odor of the contents. Furthermore, both the placement and removal of the arrangement applied to the usually require several manipulations, involving a prolonged time and rather awkward, uncomfortable tasks making what should be a pleasant walk with a canine companion a complex and bothersome task for both.

Pending application P03 01 03172 (EP1665928) of the appellants disclosing a particular embodiment tending to solve the problem, can also be mentioned.

It consists of a device of the type comprising a disposable bag made of thermoplastic material for the collection of animal excrement bonded to a semi-rigid cardioid annular element to which elastic elements are engaged by removable means serving to fasten the implement to the collar, breast strap or to the animal's body.

This implement has several improvable aspects:
a) Once the mentioned movable means are operated, the elastic elements remain engaged to the collar or to the breast strap.
b) The necessary use of the semi-rigid cardioid element bonded to the collecting bag so that the different possible removable fixing means work since the "triggers" releasing the elastic elements are the thread closing the bag which needs to work with respect to fixed points provided by such cardioid element.
c) In the bag used in this embodiment, a casing generated in the perimeter of the opening thereof is used, which creates a complication by intending to thread the closure thread and for adhering the bag for its marketing.
d) The fact that the thread for closing the bag is what does the work of disengaging the movable means makes an additional movement for whoever performs the process necessary.

Improving all the situations considered will allow facilitating the placement and removal of the implement by the owner or walker and significantly improving production costs.

Conceptually the device of the invention, which is the basis of the present invention patent, is an arrangement for collecting dog excrement, of the type using a bag which is placed against the anus of the animal.

The bag which makes up the preferred embodiment of the invention is longitudinally folded towards the axis of symmetry thereof via the opposite sides thereof and its upper edge or end is closed, preferably by means of heat sealing, the four layers generated by the folding thereof towards the axis of symmetry thus being joined. This upper edge is formed cut-out central space in the form of a circular arc which is flanked by a pair of eyelets or securing means made in the bag. At a relatively short distance from the heat-sealing, a preferably quadrangular space is cut out which encompasses only the front layer and defines the lateral entrance of the bag. An additional fifth layer of the material making up the bag is bonded thereon, having a free quadrangular space identical to the previous one and coinciding therewith, leaving a casing around the two mentioned superimposed quadrangular openings free, inside of which there is arranged a thread the ends of which, crossed over the opening, are joined to the emerging ends of a pair of removable slides or blocking means placed in the upper section of the casing. A part made of rigid material is bonded after the lower transverse section of said casing, said part having respective fixing notches at opposite ends thereof adopting the shape of slotted grooves ending in simple cuts in which the free ends of two elastic threads are operatively engaged, while respective opposite ends thereof are connected or fixed to each of the mentioned slides or blocking means, previously traversing respective holes made in the upper horizontal section of the mentioned casing.

Each of these elements consists of their own special features themselves for optimally complying with the objective thereof, as will be described below.

For the purpose of better understanding the present invention consisting of a low cost disposable device made up of a device for collecting dog excrement such that it can be carried out to practice with ease, a precise description of a preferred embodiment will be provided in the following paragraphs making reference to the attached illustrative drawings, being purely exemplary but never limiting of the invention, the components of which may be selected from different equivalents without departing from the principles of the invention established herein.

### Brief Description of the Drawings

In the illustrative drawings attached to the present technical-legal description:

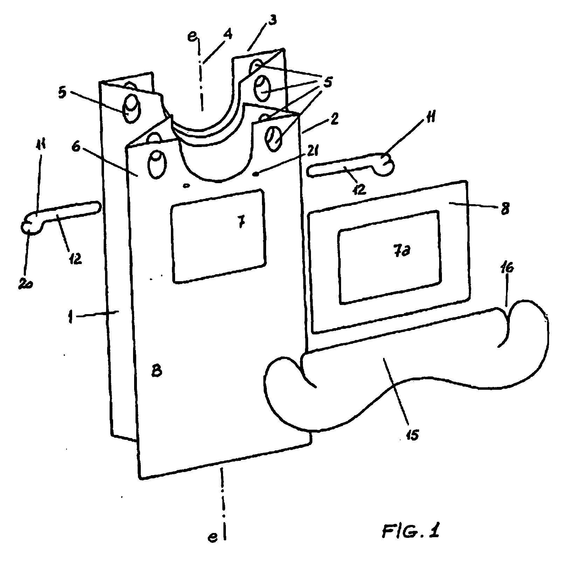

Figure 1 shows an exploded perspective view of the components of a disposable arrangement formed by the device for collecting dog excrement of the present invention.

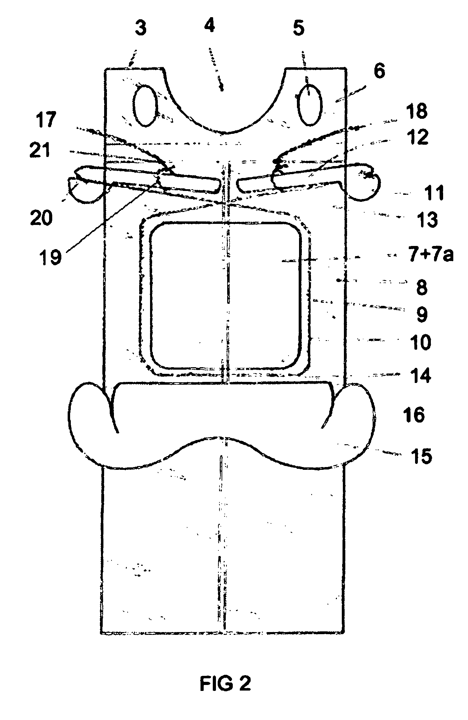

Figure 2 is a plan view of the collecting device shown from the plane where the mouth of the bag is located.
Figure 3 is a perspective view of a dog taken from its tail, with the collecting arrangement duly applied.

The same reference numbers in the figures described above indicate equal or corresponding parts.

### Description

The bag (B) making up the preferred embodiment of the invention is longitudinally folded towards the axis of symmetry (e) thereof via the opposite sides (1) and (2) thereof. Its upper edge (3) forms a cut-out central space (4) in the form of a circular arc which is flanked by a pair of eyelets or securing means (5) encompassing all the folds. This upper space (6) is heat-sealed, joining the layers forming it. At a relatively short distance from the heat-sealing, a quadrangular space (7) is cut out which only encompasses the front layer and defines the lateral entrance of the bag. An additional layer (8) of the material making up the bag is bonded thereon, having a free quadrangular space (7a) identical to the previous one and coinciding therewith, leaving a casing (9) around the two mentioned superimposed quadrangular openings (7+7a) free, inside of which there is arranged a thread (10) the ends of which, crossed over the quadrangular opening, are joined to the emerging ends (11) of a pair of removable slides (12) or blocking means placed in the upper section (13) of the peripheral casing. A transverse, elongated sheet part (15) made of rigid material is bonded after the lower transverse section of said casing, said part being provided with respective fixing notches at opposite ends thereof adopting the shape of preferably arched grooves (16), forming respective slots which taper and end in simples cuts in which the free ends of respective elastic threads (17) and (18) are operatively engaged while the respective opposite ends thereof are connected to each of said removable slides (12) or blocking means in their containing slots (20), traversing respective holes (21) made in the upper transverse section (13) of the mentioned casing (9).

### Operation

Having established the different components of the version of the invention developed for explaining its nature, the description is complemented below with the functional and operative account of its parts and of the result which they provide.

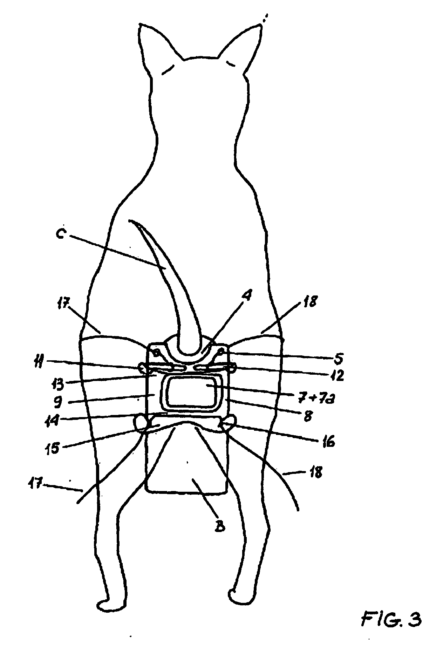

According to Figure 3, the collecting arrangement is coupled to the dog's tail with the mouth (7+7a) of the bag against the anus of the animal, such that the semicircular space (4) is positioned coinciding with its tail (C).

Each of the elastic threads (17) and (18) is taken gently tensing it, they are passed through the eyelets or securing means (5) for surrounding the dog's tail (C), they are looped over the animal's thigh, returning along the inner face thereof for respectively fastening them in the slots (16) of the sheet element (15).

Tension of the elastic threads must be assured so that the entire assembly is firmly held in place.

Once the hygienic walk with the bag being filled has ended, the collecting implement is then removed from the animal.

To do so, the removable slides (12) or blocking means retaining the loops (19) of both elastic threads (17) and (18) are pulled on, which are removed from their respective slides with this movement, loosen their tension around the animal's legs and are detached, the ties thereof being free. While at the same time the thread (10) contained in the casing (9) is pulled, it is tightened inside the casing, closing the quadrangular opening (7), closing the opening (7+7a of the bag (1), and perfectly isolating its contents.

Therefore, the two elastic threads (17) and (18) are simultaneously disengaged and released, the bag is perfectly closed and the collecting arrangement is removed from the animal for disposal with a single movement, all with a single manipulation.

It can be added that the transversally elongated sheet part (15) fixed to the substantially rigid bag can be made of cardboard or the like.

In a constructive variant, the eyelets (5) can be replaced with other securing means, such as for example a substantially rigid sheet part transversally positioned above the opening (7-7a) of the bag, provided with opposite lower concavities at the ends thereof which serve for the passage of the elastic threads in their connections around the animal's tail in which case the eyelets (5) may be eliminated.

Another constructive possibility allows eliminating the sheet part (15) necessary for providing the fixing means of the elastic threads (17) and (18). The fixing means of the elastic threads can be chosen from blocking knots in the slots described, securing hooks, a strap or self-bonding material, a Velcro system and the like which could be positioned where the elongated sheet part (15) is represented in the positions occupied by the engagement notches (16).

It has been seen according to that already stated that a single operation is sufficient for closing the bag and detaching the assembly applied to the animal, without there being a possibility of dirtying or contaminating the place, the arrangement being perfectly closed ready for being disposed of in an appropriate receptacle.

### Component Part List

B.- Collecting bag
1/2.- Side folds of the bag
3.- Upper edge of the bag
4.- Semicircular space cut out in the bag
5.- Eyelets or securing means
6.- Heat-sealed upper space
7.- Quadrangular opening of the bag
8.- Additional layer of sheet material
7a.- Quadrangular opening of (8)
9.- Perimetric sheath of the opening (7)
10.- Closure thread
11.- Emerging ends of the slides
12.- Removable slides or blocking means
13.- Upper section of the casing (9)
14.- Lower transverse section of the casing
15.- Rigid transversal elongated sheet part
16.- Fixing notches (grooves) of part (15)
17/18- Elastic threads
19.- Loops at ends of the elastic threads.
20.- Slots in the head of the slides (12)
21.- Exit holes for the elastic threads

One of the constructive possibilities leading to the invention and the manner in which the latter works has thus been described, the documentation being complemented with the summary of the invention contained in the following claims.

## Claims

1. A device for collecting dog excrement of the type in which a bag (B) preferably made of thermoplastic material is used which is placed against the anus of the animal, wherein said bag is longitudinally folded towards its axis of symmetry (e) via the opposite sides (1, 2) thereof, such that its upper edge (3) forms a cut-out central space (4) in the form of a circular arc which is flanked by a pair of eyelets or securing means (5), wherein the encompassed space is closed by joining the layers integrating it; at a relatively short distance from the closure (6) a space (7) is cut out which defines the lateral entrance of the bag, on the contour of which an additional layer (8) of the same material making up the bag is bonded, having a free space (7a) equal to the previous one arranged coinciding with the opening, defining a casing or conduit (9) around the two mentioned superimposed openings; said casing contains a thread (10) the ends of which, crossed over the opening, are joined to the emerging ends (11) of a pair of removable slides or blocking means (12) positioned on the casing; a part (15) made of rigid material is bonded below the casing, said part having fixing notches (16) at the opposite ends thereof in which the free ends of respective elastic threads (17, 18) are operatively engaged, while their respective opposite ends are fixed to each of said blocking means arranged on the mentioned casing.

2. The device for collecting dog excrement according to claim 1, **characterized in that** said elongated sheet part (15) transversally fixed to the bag (8) is made up of a low cost rigid material such as cardboard.

3. The device for collecting dog excrement according to claims 1 and the following claims, **characterized in that** said transverse section of the conduit formed by the mentioned casing, positioned over the described opening, is provided with a pair of perforations (21) on its opposite edges through which the ends of said removable slides or blocking means retaining the ends of the closure thread threaded inside the peripheral casing and crossed inside the mentioned upper transverse section exit to the outside.

4. The device for collecting dog excrement according to claim 1 and the following claims, **characterized in that** the fixing notches (16) provided in the mentioned part (15) made of rigid material have the shape of preferably arched grooves defining respective slots which taper and end in simples cuts inside which the free ends of the mentioned elastic threads (17, 18) are operatively engaged.

5. The device for collecting dog excrement according to claim 1 and the following claims, **characterized in that** said fixing means of the elastic threads (17, 18) lack said part made of rigid material and can be chosen from securing hooks, a strap or self-bonding material, a Velcro system and the like.

## Patentansprüche

1. Vorrichtung zur Aufnahme von Hundekot der Art, bei welcher ein Beutel (B) verwendet wird, welcher vorzugsweise aus einem thermoplastischen Material hergestellt ist, der an dem Darmausgang des Tieres angebracht wird, wobei der genannte Beutel zu seiner Symmetrieachse (e) hin durch die gegenüberliegenden Seiten (1, 2) desselben longitudinal gefaltet ist, so dass sein oberer Rand (3) einen ausgeschnittenen mittleren Raum (4) nach Art eines kreisförmigen Bogens bildet, welcher durch ein Paar von Ösen oder Haltemittel (5) flankiert ist, wobei der umfasste Raum durch Verbindung der diesen integrierenden Lagen geschlossen wird, in relativ geringem Abstand zum Verschluss (6) wird ein Raum (7) ausgeschnitten, welcher den seitlichen Eingang des Beutels definiert, wobei an dessen Kontur eine zusätzliche Lage (8) desselben Materials, welches den Beutel bildet, geklebt wird, die einen freien Raum (7a) aufweist, welcher dem Vorherigen gleich ist und mit der öffnung übereinstimmend angeordnet ist, und einen Zugsaum oder Kanal (9) um den beiden genannten übereinandergelagerten Öffnungen definiert; wobei der genannte Zugsaum einen Faden (10) aufweist, dessen Enden, über die öffnung gekreuzt, mit den herausragenden Enden (11) von einem Paar von entfernbaren Schiebern oder Blockiermitteln (12), die auf dem Zugsaum posdioniert sind, verbunden sind; wobei ein Teil (15), das aus steifem Material hergestellt ist, unter dem Zugsaum geklebt ist, wobei das genannte Teil Befestigungskerben (16) an den gegenüberliegenden Enden desselben aufweist, in welchen die freien Enden von jeweiligen elastischen Fäden (17, 18) operativ eingreifen, während die jeweiligen gegenüberliegenden Enden desselben an jedem der genannten Blockiermittel, welche auf dem genannten Zugsaum angeordnet sind, befestigt sind.

2. Vorrichtung zur Aufnahme von Hundekot nach Anspruch 1, **dadurch gekennzeichnet, dass** das genannte längliche blattförmige Teil (15), welches an dem Beutel (B) transversal befestigt ist, aus einem günstigen steifen Material, wie Pappe, hergestellt ist.

3. Vorrichtung zur Aufnahme von Hundekot nach Anspruch 1 und den folgenden Ansprüchen, **dadurch gekennzeichnet, dass** der genannte transversale Abschnitt des Kanals, welcher von dem genannten Zugsaum gebildet wird und auf der beschriebenen Öffnung positioniert ist, mit einem Paar von Durchbohrungen (21) auf seinen gegenüberliegenden Enden versehen ist durch welche die Enden der genannten entfernbaren Schiebern oder Blocklermittel, welche die Enden des schließende Fadens, welcher innerhalb des peripheren Zugsaums eingefädelt und innerhalb des genannten oberen transversalen Abschnitts gekreuzt ist, halten, nach außen austreten.

4. Vorrichtung zur Aufnahme von Hundekot nach Anspruch 1 und den folgenden Ansprüchen, **dadurch gekennzeichnet, dass** die Befestigungskerben (16), welche in dem genannten Teil (15), das aus steifem Material hergestellt ist, versehen sind, die Form von vorzugsweise bogenförmigen Nuten aufweisen, welche jeweilige Aussparungen defnieren, welche sich verjüngen und in einfachen Schnitten enden, innerhalb welchen die freien Enden der genannten elastischen Fäden (17, 18) operativ eingreifen.

5. Vorrichtung zur Aufnahme von Hundekot nach Anspruch 1 und den folgenden Ansprüchen, **dadurch gekennzeichnet, dass** die genannten Befestigungsmittel der elastischen Fäden (17, 18) das genannte Teil, welches aus steifem Material hergestellt ist und aus Haltehaken, einem Streifen oder einem selbstklebenden Material, einem Klattbandsystem und Ähnlichem ausgewählt werden kann, nicht aufweisen.

## Revendications

1. Dispositif de collecte d'excréments pour chiens, du type dans lequel est utilisé un sachet (B), de préférence constitué d'une matière thermoplastique qui est place contre l'anus de l'animal, dans lequel ledit sachet est plié longitudinalement en direction de son axe de symétrie (e) par ses côtés opposés (1, 2), de telle sorte que son bord supérieur (3) forme un espace central de découpe (4) sous la forme d'un arc de cercle qui est flanqué d'une paire d'oeillets ou moyens de fixation (5), dans lequel l'espace englobé est fermée en joignant les couches qui l'intègrent; à une distance relativement courte de la fermeture (6), un espace (7) qui définit l'entrée latérale du sachet est découpé, sur le contour duquel est collée une couche supplémentaire (8) de la même matière constituant le sachet, en ayant un espace libre (7a) identique au précédent, aménagé en coïncidence avec l'ouverture, définissant une coulisse ou un conduit (9) autour des dites deux ouvertures superposées ; ladite coulisse comporte un filament (10) dont les extrémités, croisées sur l'ouverture, sont reliées aux extrémités émergentes (11) d'une paire de glissières amovibles ou moyens de blocage (12) positionnés sur la coulisse; une pièce (15) constitué de matière rigide est collée au-dessous de la coulisse, ladite pièce ayant des encoches de fixation (16) à ses extrémités opposées dans lesquelles les extrémités libres des filaments élastiques (17, 18) respectifs sont opérationnellement en prise, tandis que leurs extrémités opposées respectives sont fixées sur chacun desdits moyens de blocage disposés sur la coulisse mentionnée.

2. Dispositif de collecte d'excréments pour chiens selon la revendication 1, **caractérisé en ce que** ladite pièce de feuille allongée (15) transversalement fixée au sachet (8) est constituée d'une matière rigide à faible coût, tel que le carton.

3. Dispositif de collecte d'excréments pour chiens selon la revendication 1 et les revendications suivantes, **caractérisé en ce que** ladite section transversale du conduit formé par ladite coulisse, positionnée au-dessus de l'ouverture décrite, est pourvue d'une paire de perforations (21) sur ses bords opposés à travers lesquelles les extrémités desdites glissières amovibles ou moyens de blocage retenant les extrémités du filament de fermeture enfilé à l'intérieur de la coulisse périphérique et croisé à l'intérieur de ladite section transversale supérieure sortent à l'extérieur.

4. Dispositif de collecte d'excréments pour chiens selon le revendication 1 et les revendications suivantes, **caractérisé en ce que** les encoches de fixation (16) prévues dans ladite pièce (15) faite de matière rigide ont de préférence la forme de rainures arquées définissant des fentes respectives qui diminuent et terminent dans de simples coupes à l'intérieur desquelles les extrémités libres desdits filaments élastiques (17, 18) sont opérationnellement en prise.

5. Dispositif de collecte d'excréments pour chiens selon la revendication 1 et les revendications suivantes, **caractérisé en ce que** lesdits moyens de fixation des filaments élastiques (17, 18) manquent de ladite pièce faite de matière rigide et peuvent être choisis parmi des crochets de fixation, une sangle ou matière autocollant, un système de velcro et analogues.
